# FASCICULE DE BREVET EUROPEEN

(11) **EP 3 612 417 B1**
(45) Date de publication et mention de la délivrance du brevet: **05.05.2021**
(21) Numéro de dépôt: 18718168.0
(22) Date de dépôt: 23.04.2018
(51) Int. Cl.: B60R 25/24, G01S 5/02, G01S 13/87

(54) **DISPOSITIF D'IDENTIFICATION D'UNE POSITION D'UNE UNITÉ ÉLECTRONIQUE SUR UN VÉHICULE AUTOMOBILE**
VORRICHTUNG ZUR ERKENNUNG EINER POSITION EINER ELEKTRONISCHEN EINHEIT AN EINEM KRAFTFAHRZEUG
DEVICE FOR IDENTIFYING A POSITION OF AN ELECTRONIC UNIT ON A MOTOR VEHICLE

(30) Priorité: 21.04.2017 FR 1753508
(43) Date de publication de la demande: 26.02.2020
(73) Titulaire: Valeo Comfort and Driving Assistance, 94046 Créteil Cedex (FR)
(72) Inventeur: GUEBLE, Christophe, 94046 Creteil Cedex (FR)
(74) Mandataire: Delplanque, Arnaud
(86) Numéro de dépôt international: PCT/EP2018/060320
(87) Numéro de publication internationale: WO 2018/193133

(56) Documents cités:
- EP-A2- 2 800 068
- WO-A1-2016/198640
- DE-A1-102014 217 504
- JP-A- 2009 084 929
- JP-A- 2013 044 687

## Description

La présente invention concerne un dispositif d'identification d'une position d'une unité électronique secondaire sur un véhicule automobile.

Elle trouve une application particulière mais non limitative dans le domaine des véhicules automobiles.

### ARRIÈRE-PLAN TECHNOLOGIQUE DE L'INVENTION

Dans le domaine des véhicules automobiles, l'identification d'une position d'une unité électronique secondaire, telle qu'une balise, sur un véhicule automobile est réalisée lors de son installation sur le véhicule automobile par le biais d'un opérateur. A cet effet, lors d'une phase dite d'apprentissage, l'opérateur lit au moyen d'un matériel spécifique un code barre sur chaque unité électronique secondaire avant de la monter sur le véhicule automobile et l'associe avec la position à laquelle elle est montée sur le véhicule automobile. Il renseigne alors une base de données qui sera accessible par le véhicule automobile

DE 10 2014 217504 A1 divulgue un dispositif d'identification d'une position d'une unité électronique secondaire sur un véhicule automobile.

Un inconvénient de cet état de la technique est que cette phase d'apprentissage prend trop de temps et est coûteuse car elle nécessite une opération manuelle avec un matériel spécifique.

### DESCRIPTION GENERALE DE L'INVENTION

A cette fin l'invention propose un dispositif d'identification d'une position d'une unité électronique secondaire sur un véhicule automobile, selon lequel ledit dispositif d'identification comprend :
- une unité électronique centrale adaptée pour gérer l'alimentation d'une pluralité d'unités électroniques secondaires et comprenant un dispositif de commutation de l'alimentation de toutes les unités électroniques secondaires ;
- un compteur temporel principal adapté pour être déclenché en corrélation temporelle avec l'activation de l'alimentation desdites unités électroniques secondaires par ledit dispositif de commutation ;
- ladite pluralité d'unités électroniques secondaires, chaque unité électronique secondaire :
   - comprenant un compteur temporel secondaire adapté pour être déclenché en corrélation temporelle avec l'alimentation de ladite unité électronique secondaire ;
   - étant adaptée pour effectuer au moins une mesure de tension en interne lorsqu'elle est alimentée, ladite au moins une mesure de tension étant représentative de la position de ladite unité électronique secondaire sur ledit véhicule automobile.

Ainsi, comme on le verra en détail par la suite, grâce à l'activation de l'alimentation de toutes les unités électroniques secondaires, lesdites unités électroniques secondaires vont pouvoir connaître leur position en effectuant des mesures de tensions en interne et la renvoyer à ladite unité électronique centrale ainsi que leur identifiant. Ladite unité électronique centrale va ainsi pouvoir associer chaque identifiant reçu avec une position. Par ailleurs, grâce à une corrélation entre le compteur temporel principal et les compteurs temporels secondaires, l'unité électronique centrale peut vérifier que l'unité électronique secondaire dont l'alimentation vient d'être activée appartient bien au véhicule automobile et non pas à un autre véhicule automobile. L'appairage d'une unité électronique secondaire à un véhicule automobile donné est ainsi effectué.

Selon des modes de réalisation non limitatifs, le dispositif d'identification peut comporter en outre une ou plusieurs caractéristiques supplémentaires parmi les suivantes.

Selon un mode de réalisation non limitatif, une unité électronique secondaire est une balise.

Selon un mode de réalisation non limitatif, le dispositif de commutation est adapté pour activer l'alimentation de ladite pluralité d'unités électroniques secondaires simultanément.

Selon un mode de réalisation non limitatif, une unité électronique secondaire comprend un connecteur comportant une broche d'alimentation, une broche de masse et au moins une broche d'acquisition à partir de laquelle ladite au moins une mesure de tension est effectuée.

Selon un mode de réalisation non limitatif, une unité électronique secondaire est adaptée pour effectuer deux mesures de tensions.

Selon un mode de réalisation non limitatif, les deux mesures de tension forment une combinaison qui est représentative de la position de ladite unité électronique secondaire et ladite combinaison est différente d'une unité électronique secondaire à une autre sur ledit véhicule automobile.

Selon un mode de réalisation non limitatif, ledit connecteur de ladite unité électronique secondaire est adapté pour se connecter à un connecteur véhicule, ce dernier comprenant une broche d'alimentation, une broche de masse et au moins une broche de codage et au moins une résistance reliée à au moins deux broches parmi ladite broche d'alimentation, ladite broche de masse et ladite au moins une broche de codage et selon lequel ladite au moins une mesure de tensions est fonction d'une valeur de ladite au moins une résistance.

Selon un mode de réalisation non limitatif, ledit connecteur véhicule comprend deux broches de codage.

Selon un mode de réalisation non limitatif, la valeur de ladite au moins une résistance est définie de sorte à générer un court-circuit entre lesdites au moins deux broches auxquelles ladite au moins une résistance est reliée.

Selon un mode de réalisation non limitatif, lorsqu'elle est alimentée, une unité électronique secondaire est adaptée pour diffuser une trame d'annonce comprenant un identifiant, sa position sur le véhicule automobile et ledit compteur temporel secondaire.

Selon un mode de réalisation non limitatif, ladite unité électronique centrale est adaptée pour :
- recevoir ladite trame d'annonce diffusée par ladite unité électronique secondaire ;
- corréler ledit compteur temporel secondaire avec ledit compteur temporel principal de sorte à vérifier que ladite unité électronique secondaire appartient audit véhicule automobile ;
- enregistrer en mémoire ladite position avec ledit identifiant de ladite unité électronique secondaire reçus dans ladite trame d'annonce.

Selon un mode de réalisation non limitatif, ladite unité électronique centrale est en outre adaptée pour transmettre audit terminal utilisateur ledit identifiant et ladite position associée de chaque unité électronique secondaire sur le véhicule automobile.

Selon un mode de réalisation non limitatif, ladite unité électronique centrale est en outre adaptée pour :
- désactiver l'alimentation de toutes les unités électroniques secondaires simultanément ; et
- réactiver l'alimentation de toutes les unités électroniques secondaires simultanément.

Selon un mode de réalisation non limitatif, ledit dispositif de commutation comprend un unique interrupteur associé à toutes les unités électronique secondaires.

Selon un mode de réalisation non limitatif, ladite unité électronique centrale est un calculateur connectable à un réseau du véhicule automobile ou est adaptée pour coopérer avec un calculateur connectable à un réseau du véhicule automobile.

Selon un mode de réalisation non limitatif, ladite unité électronique centrale et lesdites unités électroniques secondaires sont adaptées pour communiquer avec un terminal utilisateur selon un protocole de communication Bluetooth™. Dans une variante de réalisation non limitative, le protocole de communication est Bluetooth Low Energy™.

Selon un mode de réalisation non limitatif, le terminal utilisateur est un identifiant, un téléphone mobile, une tablette, un badge.

### BREVE DESCRIPTION DES FIGURES

L'invention et ses différentes applications seront mieux comprises à la lecture de la description qui suit et à l'examen des figures qui l'accompagnent.
- la figure 1a représente un schéma d'un dispositif d'identification d'une position d'une unité électronique secondaire sur un véhicule automobile, selon un premier mode de réalisation non limitatif de l'invention, ledit dispositif d'identification comprenant une unité électronique centrale et une pluralité d'unités électroniques secondaires ;
- la figure 1b représente un schéma d'un dispositif d'identification d'une position d'une unité électronique secondaire sur un véhicule automobile, selon un deuxième mode de réalisation non limitatif de l'invention ;
- la figure 2 représente une architecture du dispositif d'identification des figures 1a ou 1b, selon un premier mode de réalisation non limitatif ;
- la figure 3 représente une architecture du dispositif d'identification des figures 1a ou 1b, selon un deuxième mode de réalisation non limitatif ;
- la figure 4 représente un dispositif de commutation de ladite unité électronique centrale des figures 1a et 1b selon un mode de réalisation non limitatif ;
- la figure 5 représente un tableau de codage indiquant un codage de court-circuits entre différentes broches d'un connecteur véhicule adapté pour coopérer avec un connecteur d'une unité électronique secondaire selon les figures 1a ou 1b, sur lequel des mesures de tensions représentatives de la position de ladite unité électronique secondaire sont effectuées ;
- les figures 6a à 6d représentent différents court-circuits produits dans un connecteur véhicule tel que définis dans le tableau de codage de la figure 5;
- la figure 7 représente un diagramme temporel illustrant une phase d'initialisation dans laquelle ladite unité électronique centrale et ladite pluralité d'unités électroniques secondaires du dispositif d'identification des figures 1a ou 1b coopèrent ensemble, selon un mode de réalisation non limitatif ; et
- la figure 8 représente un diagramme temporel illustrant une phase de fonctionnement dans laquelle ladite unité électronique centrale et ladite pluralité d'unités électroniques secondaires du dispositif d'identification des figures 1a ou 1b coopèrent avec un terminal utilisateur, selon un mode de réalisation non limitatif.

### DESCRIPTION DE MODES DE REALISATION DE L'INVENTION

Les éléments identiques, par structure ou par fonction, apparaissant sur différentes figures conservent, sauf précision contraire, les mêmes références.

L'invention concerne un dispositif d'identification DISP d'une position d'une unité électronique secondaire sur un véhicule automobile.

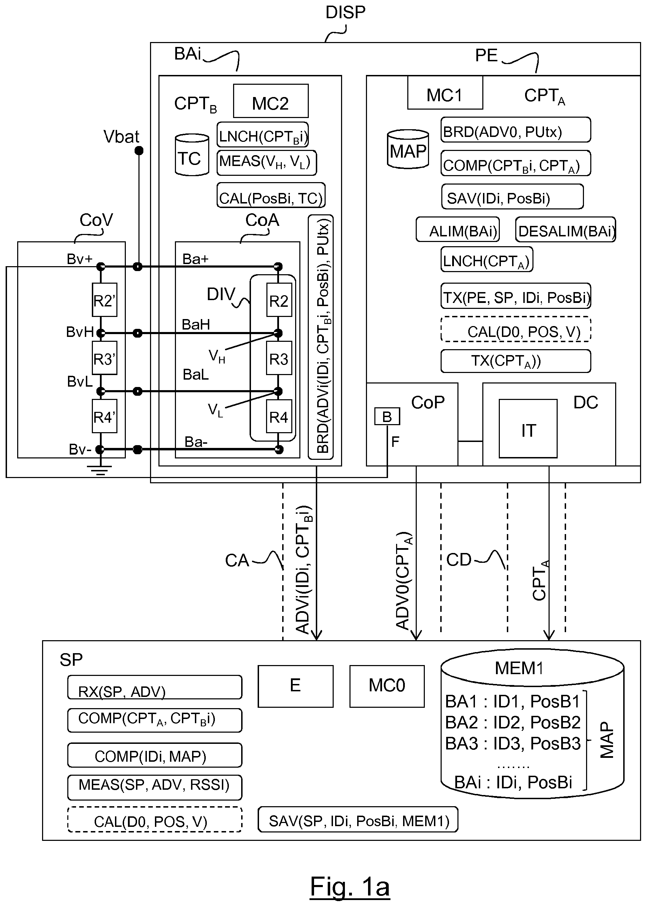

Ledit dispositif d'identification DISP est décrit en référence aux figures 1a à 8.

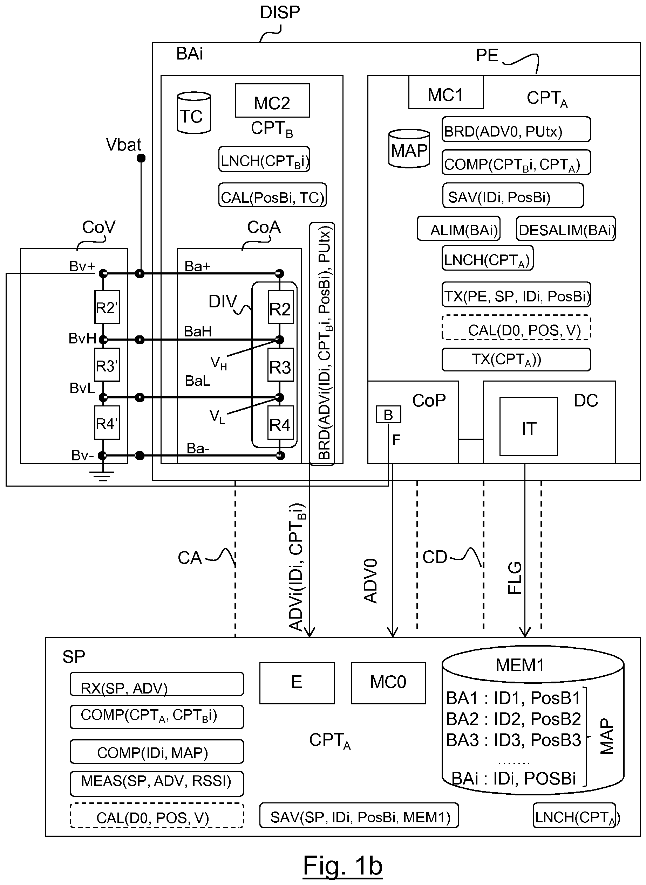

Tel qu'illustré sur les figures 1a et 1b, le dispositif d'identification DISP comprend :
- une unité électronique centrale PE adaptée pour gérer l'alimentation Vcc d'une pluralité d'unités électroniques secondaires BA ;
- au moins un compteur temporel principal CPT_{A}; et
- ladite pluralité d'unités électroniques secondaires BA.

Ladite unité électronique centrale PE et lesdites unités électroniques secondaires BA sont adaptées pour communiquer avec un terminal utilisateur SP. Dans un mode de réalisation non limitatif, elles communiquent avec ledit terminal utilisateur SP selon un protocole de communication Bluetooth™ ou Bluetooth Low Energy™ appelé BLE.

Pour la suite de la description, on utilisera le terme appareil pour indiquer un terminal utilisateur SP ou une unité électronique secondaire BA ou une unité électronique centrale PE.

Dans un mode de réalisation non limitatif, l'unité électronique secondaire BA est une balise. Dans la suite de la description, on utilisera indifféremment le terme unité électronique secondaire ou balise.

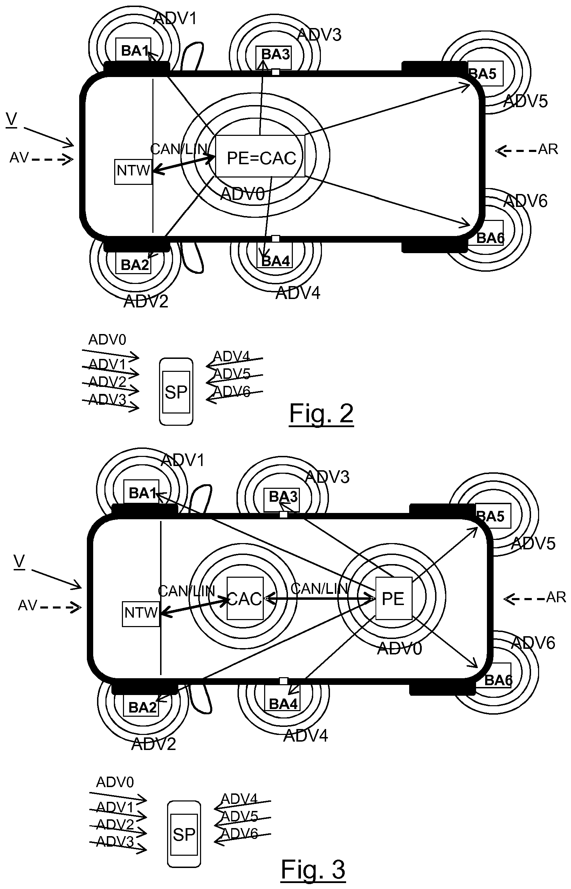

Dans un exemple non limitatif illustré sur les figures 2 et 3, le dispositif d'identification DISP comprend six balises BA1 à BA6.

### • Architecture

Le dispositif d'identification DISP peut avoir différentes architectures qui sont décrites ci-après selon des modes de réalisation non limitatifs.

Dans un premier mode de réalisation non limitatif illustré sur la figure 2, ladite unité électronique centrale PE est un calculateur connectable CAC à un réseau NTW du véhicule automobile V. Ce réseau est dans un exemple non limitatif un réseau LIN ou CAN.

Dans un deuxième mode de réalisation non limitatif illustré sur la figure 3, ladite unité électronique centrale PE est adaptée pour coopérer avec un calculateur connectable CAC avec un réseau NTW du véhicule automobile V. Le calculateur connectable CAC communique avec le terminal utilisateur SP via une communication BLE ou Bluetooth™. Ce mode de réalisation est intéressant lorsqu'il n'est pas possible d'intégrer un dispositif de commutation DC dans un calculateur connectable standard de véhicule automobile, notamment de lui ajouter des broches d'alimentation et/ou de masse B (décrites plus loin). Dans ce deuxième mode de réalisation, l'unité électronique centrale PE coopère avec le calculateur connectable CAC via le réseau LIN (« Local internetwork » en anglais) ou CAN (« Controller Area Network » en anglais) du véhicule automobile V. L'unité électronique centrale PE sert ainsi de passerelle pour la gestion de l'alimentation Vcc des balises BA. On notera qu'après l'exécution de la phase d'initialisation PH0 décrite plus loin, l'unité électronique centrale PE renvoie au calculateur CAC une liste MAP des balises BA et de leur position PosB donnée via le réseau LIN/CAN et le calculateur CAC transmet cette liste au terminal utilisateur SP.

Le terminal utilisateur SP ainsi que Les éléments du dispositif d'identification DISP sont décrits en détail ci-dessous.

### • Terminal utilisateur SP

Le terminal utilisateur SP est illustré sur les figures 1a et 1b.

Dans un mode de réalisation non limitatif, le terminal utilisateur SP comprend un écran d'affichage E.

Un utilisateur peut contrôler l'exécution d'une fonction Fct au moyen du terminal utilisateur SP. Dans des modes de réalisation non limitatifs, la fonction Fct est un verrouillage/déverrouillage du véhicule automobile V pour accéder audit véhicule automobile V ou un démarrage du véhicule automobile V ou tout autre fonction nécessitant une localisation du terminal utilisateur SP. La fonction Fct permet ainsi l'accès au véhicule automobile V, c'est-à-dire qu'elle permet d'ouvrir/fermer un ouvrant du véhicule (portière ou coffre). La procédure d'accès à un véhicule automobile ou de démarrage via un terminal utilisateur SP étant bien connue de l'homme du métier, elle n'est pas décrite ici.

Dans des exemples non limitatifs, le terminal utilisateur SP est un identifiant, un badge, une tablette, un téléphone mobile tel que dans un exemple non limitatif un téléphone dit intelligent (« Smartphone en anglais») utilisé par un utilisateur du véhicule automobile V.

Pour être utilisé avec un véhicule automobile V, le terminal utilisateur SP doit être appairé audit véhicule automobile V. L'appairage s'effectue après que le terminal utilisateur SP a été authentifié lorsqu'il se trouve à proximité du véhicule automobile V. Une telle authentification étant connue de l'homme du métier, elle n'est pas décrite ici. Lorsque le terminal utilisateur SP est appairé, un canal de communication sécurisé est établi avec le véhicule automobile V (via l'unité électronique centrale PE ou un calculateur CAC). Par ailleurs, pour des raisons de sécurité, l'exécution d'une fonction Fct du véhicule automobile V est conditionnée par la localisation du terminal utilisateur SP par rapport au véhicule automobile V, à savoir par la distance à laquelle il se trouve par rapport au véhicule automobile V. Dans un exemple non limitatif, le déverrouillage du véhicule automobile V peut s'effectuer lorsque le terminal utilisateur SP se trouve proche du véhicule automobile V, à une distance sensiblement inférieure ou égale à 2m (mètres) dans l'exemple non limitatif des bonnes pratiques recommandées par des organismes faisant référence dans le domaine comme le consortium britannique « Thatcham ».

La mesure d'une distance entre le terminal utilisateur SP et le véhicule automobile V s'effectue au moyen de la mesure de la puissance d'un signal reçu dont la puissance initiale est connue à savoir la puissance à l'émission dudit signal est connue, ce qui permet de déduire la distance entre l'émetteur et le récepteur par une évaluation de la chute de puissance du signal due à l'espace libre qui sépare le véhicule automobile V du terminal utilisateur SP. L'émetteur est ici une unité électronique BA, ou centrale PE du véhicule automobile V et le récepteur est le terminal utilisateur SP.

On appelle cette méthode mesure par RSSI (en anglais « Received Signal Strength Indication »).

Le terminal utilisateur SP est ainsi adapté pour mesurer la puissance en réception RSSI de signaux reçus (fonction illustrée sur la figure 1 MEAS(SP, ADV, RSSI)). Dans la suite de la description, les termes mesure de la puissance en réception RSSI ou mesure RSSI seront indifféremment utilisés. Pour améliorer la mesure de la distance, on utilise une pluralité d'unités électroniques BA, PE et un algorithme de localisation, est réalisé sur les différentes mesures de puissance des signaux reçus. Comme on va le voir ci-après, les signaux reçus par le terminal utilisateur SP sont des trames d'annonce ADV diffusées par les unités électroniques BA, PE.

Tel qu'illustré, le terminal utilisateur SP comprend un module de communication sans fil MC0 qui comprend ainsi une antenne BLE dans un exemple non limitatif qui sert d'émetteur/récepteur.

Le module de communication sans fil MC0 du terminal utilisateur SP permet d'établir une liaison sans fil (ici « Bluetooth Low Energy™ ») avec le module de communication sans fil MC2 d'une balise BA du véhicule automobile V ou le module de communication sans fil MC1 de l'unité électronique centrale PE. Le module de communication sans fil MC0 du terminal utilisateur SP est adapté pour être dans un mode balayage (mode *"scanning"* en technologie Bluetooth). A cet effet, il est adapté pour effectuer un balayage de canaux d'annonce CA pour recevoir les trames d'annonce ADV diffusées par les unités électroniques BA ou PE.

Le terminal utilisateur SP est adapté ainsi pour recevoir les trames d'annonce diffusées par les unités électroniques BA ou PE (fonction illustrée sur la figure 1 RX(SP, ADV)).

Par ailleurs, le terminal utilisateur SP est adapté pour sauvegarder en mémoire MEM1 une liste MAP des identifiants ID des balises BA et de leur position PosB respective, liste qui a été établie lors d'une phase d'initialisation PH0 décrite plus loin (fonction illustrée sur la figure 1 SAV(SP, IDi, PosBi, MEM1)).

Enfin, lors d'une phase de fonctionnement PH1 décrite plus loin, le terminal utilisateur SP est adapté pour :
- comparer un identifiant ID de la balise BA reçu dans une trame d'annonce ADV diffusée par ladite balise BA avec les identifiants provenant de ladite liste et sauvegardés en mémoire (fonction illustrée sur la figure 1 COMP(IDi, MAP)) ; et
- comparer un compteur temporel secondaire CPT_{B} de ladite balise BA reçu dans une trame d'annonce ADV diffusée par ladite balise BA avec le compteur temporel principal CPT_{A} reçu (fonction illustrée sur la figure 1 COMP(CPT_{A}, CPT_{B}i)).

Le compteur temporel secondaire CPT et le compteur temporel principal CPT sont décrits plus loin. Ils permettent en particulier au terminal utilisateur SP de vérifier si une balise BA n'a pas été piratée.

Dans un mode de réalisation non limitatif, le terminal utilisateur SP est en outre adapté pour calculer sa position POS par rapport au véhicule automobile V, à partir de chaque distance D0 à laquelle il se trouve par rapport à chaque balise BA (fonction illustrée en pointillés sur les figures 1a et 1b CAL(D0, POS, V)).

### • Unité électronique centrale PE

L'unité électronique centrale PE est illustrée sur les figures 1a et 1b.

L'unité électronique centrale PE est appelée également émetteur/récepteur central ou « central transceiver » en anglais.

L'unité électronique centrale PE est dans un mode dit connectable car elle peut établir une connexion avec le terminal utilisateur SP.

Elle est adaptée pour être dans un mode diffusion (mode "advertising" en technologie Bluetooth™) ou dans un mode balayage (mode "scanning" en technologie Bluetooth™). A cet effet, l'unité électronique centrale PE comprend un module de communication sans fil MC1 qui comprend une antenne BLE dans un exemple non limitatif qui sert d'émetteur/récepteur. Dans le mode de diffusion, l'unité électronique centrale PE est adaptée pour diffuser une pluralité de trames d'annonce ADV (fonction illustrée sur les figures 1a, 1b BRD(ADV0, PUtx)) au sein de canaux spécifiques, dits canaux d'annonce CA (en anglais *"advertising channels*") distincts de canaux de données CD (en anglais : *"data channels*") utilisés pour transmettre des trames d'échange de données applicatives relatives à des connexions établies. Les canaux d'annonce CA sont répartis sur la bande de fréquence de 2,4GHz.

Dans le mode balayage, l'unité électronique centrale PE est adaptée pour effectuer un balayage desdits canaux d'annonce CA pour recevoir une trame d'annonce ADV diffusée par les unités électroniques secondaires BA.

Outre les trames d'annonce ADV, l'unité électronique centrale PE peut échanger des trames de données sur des canaux de données CD avec le terminal utilisateur SP, ces canaux de données CD faisant partie d'un canal de communication sécurisé.

Dans un mode de réalisation non limitatif, l'unité électronique centrale PE est adaptée pour :
- valider l'authentification du terminal utilisateur SP qui permet d'exécuter la fonction Fct ;
- activer la fonction à exécuter Fct tel que le verrouillage/déverrouillage du véhicule automobile, le démarrage du véhicule automobile etc.

L'unité électronique centrale PE est en outre adaptée pour gérer l'alimentation Vcc de la pluralité de balises BA. A cet effet, l'unité électronique centrale PE comprend un dispositif de commutation DC de l'alimentation Vcc de toutes les balises BA. Via son dispositif de commutation DC, l'unité électronique centrale PE est adaptée pour :
- activer l'alimentation Vcc de toutes les balises BA (fonction illustrée sur les figures 1a et 1b ALIM(BAi)) ;
- désactiver l'alimentation Vcc de toutes les balises BA (fonction illustrée sur les figures 1a et 1b DESALIM(BAi)).

Lors d'une phase d'initialisation PH0, l'unité électronique centrale PE est adaptée pour activer l'alimentation Vcc de toutes les balises BA simultanément. Comme on va le voir plus loin, cela permet à toutes les balises BA de déterminer leur propre position PosB, ce qui va permettre d'établir une correspondance entre une position PosB dans une liste de positions PosB prédéfinie et une balise BA donnée.

Lorsqu'une balise BA est alimentée, elle diffuse une trame d'annonce ADV qui comprend un identifiant ID, un compteur temporel secondaire CPT_{B} et sa propre position PosB sur le véhicule automobile V qu'elle a déterminée. Sur réception de la trame d'annonce ADV de ladite balise BA, l'unité électronique centrale PE va récupérer l'identifiant ID de la balise BA et sa position PosB et va ainsi pouvoir enregistrer en mémoire ladite balise BA et ladite position PosB associée à ladite balise BA.

On notera par ailleurs qu'il y a un risque que les trames d'annonce ADV du véhicule automobile V soient confondues avec celles d'un autre véhicule automobile garé à proximité et donne un information erronée à l'algorithme de localisation de la position POS du terminal utilisateur SP, ce dernier pouvant effectuer des commandes interdites ou ne pas fonctionner correctement. Pour se prévenir de cette éventualité, il est nécessaire d'associer les balises BA via leur identifiant ID unique qui leur a été affecté lors de leur fabrication, au véhicule automobile V sur lequel elles ont été implantées. Aussi, comme on va le voir plus loin, grâce à une corrélation temporelle d'événements synchrones, l'unité électronique centrale PE va pouvoir déterminer si une balise BA appartient bien au véhicule automobile V ou non.

Lors d'une phase de fonctionnement PH1, à savoir après appairage du terminal utilisateur SP, l'unité électronique centrale PE est adaptée pour activer également l'alimentation Vcc de toutes les balises BA simultanément. Cela permet au terminal utilisateur SP d'effectuer pour chaque balise BA la mesure RSSI d'une trame d'annonce ADV d'une balise BA en sachant exactement la position PosB à laquelle se trouve ladite balise BA sur le véhicule automobile V et de déterminer ainsi correctement à quelle distance D0 se trouve le terminal utilisateur SP d'une balise BA, cette distance D0 étant fonction de la position PosB de ladite balise BA sur le véhicule automobile V.

Dans un mode de réalisation non limitatif, l'unité électronique centrale PE est en outre adaptée pour calculer la position POS du terminal utilisateur SP par rapport au véhicule automobile V, à partir de chaque distance D0 à laquelle il se trouve par rapport à chaque balise BA (fonction illustrée en pointillés sur les figures 1a et 1b CAL(D0, POS, V)).

### ∘ Dispositif de commutation DC

Le dispositif de commutation DC est adapté pour activer ou désactiver l'alimentation Vcc d'une balise BA.

En particulier, lors de la phase d'initialisation PH0, le dispositif de commutation DC est adapté pour :
- activer l'alimentation Vcc desdites unités électroniques secondaires BA simultanément ;
- désactiver l'alimentation Vcc desdites unités électroniques secondaires BA simultanément.

De même, lors de la phase de fonctionnement PH1, le dispositif de commutation DC est adapté pour activer l'alimentation Vcc de toutes les unités électroniques secondaires BA simultanément.

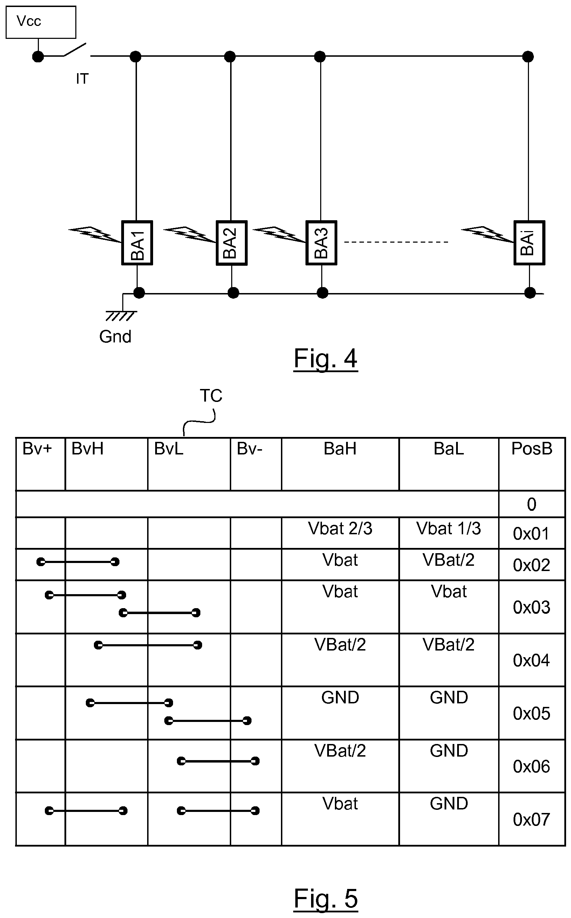

Le dispositif de commutation DC comprend un unique interrupteur IT associé à toutes les balises BA tel qu'illustré sur la figure 4, ledit interrupteur IT étant adapté pour :
- se fermer de sorte à activer l'alimentation Vcc de toutes les balises BA ;
- s'ouvrir de sorte à désactiver l'alimentation Vcc de toutes les balises BA. Dans un mode de réalisation non limitatif illustré sur la figure 4, lesdites balises BA comprennent une masse Gnd connectée au châssis du véhicule automobile. Dans un autre mode de réalisation non limitatif (non illustré), chaque balise BA comprend un fil de masse relié à la masse de l'unité centrale électronique PE.

Dans un mode de réalisation non limitatif, tel qu'illustré sur les figures 1a et 1b, ladite unité électronique centrale PE comprend un connecteur central CoP comprenant une broche B, dite broche d'alimentation reliée audit interrupteur IT. Ladite broche B permet de relier le connecteur central CoP à un connecteur véhicule CoV tel qu'illustré sur les figures 1a et 1b. Le connecteur véhicule CoV est lui-même relié à un connecteur balise CoA.

Un seul fil F relie la broche B au connecteur véhicule CoV, en particulier à sa broche d'alimentation Bv+ (décrite plus loin). Le connecteur central CoP est petit car il ne comprend qu'une seule broche B. Le connecteur central CoP permet ainsi de relier l'unité électronique centrale PE à toutes les balises BA via les différents connecteurs véhicules CoV.

Ainsi, dans l'exemple non limitatif de six balises BAi (i=1 à 6), le connecteur central CoP est relié à six connecteurs véhicules CoV, chaque connecteur véhicule CoV étant connecté à une des six balises BA1 à BA6 via un connecteur balise CoA. Le connecteur central CoP comprend ainsi un fils d'alimentation F qui part de sa broche B et qui permet de relier l'unité électronique centrale PE à chacun des six connecteurs CoV, et ce en parallèle.

Pour activer l'alimentation de toutes les balises BA, ledit dispositif de commutation DC de l'unité électronique centrale PE ferme son interrupteur IT ce qui permet de connecter la broche B du connecteur central CoP de sorte à activer l'alimentation Vcc de toutes les balises BA. Les connecteurs CoA de chacune des balises BA sont ainsi connectés chacun à un connecteur véhicule CoV associé.

Pour désactiver l'alimentation de toutes les balises BA, ledit dispositif de commutation DC de l'unité électronique centrale PE ouvre son interrupteur IT ce qui permet de déconnecter la broche B du connecteur central CoP de sorte à désactiver l'alimentation Vcc de toutes les balises BA. Les connecteurs CoA de chacune des balises BA sont ainsi déconnectés chacun du connecteur véhicule CoV associé.

On notera qu'un connecteur véhicule CoV est un connecteur à au moins trois voies qui comprend :
- une broche d'alimentation Bv+ (appelée par la suite broche Bv+) adaptée pour être reliée à une batterie de véhicule automobile V qui fournit une tension batterie Vbat ;
- une broche de masse Bv- (appelée par la suite broche Bv-) adaptée pour être reliée au châssis du véhicule automobile V ;
- au moins une broche de codage BvH, BvL.

Le connecteur véhicule CoV comprend au moins une résistance R' disposée entre au moins deux broches parmi ladite broche Bv+, ladite broche Bv-, ladite au moins une broche de codage BvH, BvL.

Dans un mode de réalisation non limitatif illustré sur les figures 1a et 1b, le connecteur véhicule CoV comprend deux broches de codage, à savoir une broche de codage primaire BvH (appelée par la suite broche BvH) et une broche de codage secondaire BvL (appelée par la suite broche BvL).

Dans un mode de réalisation non limitatif illustré sur les figures 1a et 1b, le connecteur véhicule CoV comprend trois résistances R2', R3' et R4' disposées respectivement entre les broches Bv+ BvH, BvH BvL, et BvL Bv-. Dans un mode de réalisation non limitatif, les trois résistances R2', R3', R4' ont la même valeur. Dans un mode de réalisation non limitatif, les trois résistances R2', R3', R4' ont des valeurs différentes. Bien entendu, il est possible d'avoir deux résistances qui ont la même valeur et une troisième qui a une valeur différente des deux autres.

Différentes combinaisons de valeurs des trois résistances R2', R3', R4' vont permettre d'obtenir différentes combinaisons de mesures de tensions V_{H} et V_{L} différentes au niveau d'un connecteur balise CoA, et différentes combinaisons de mesures de tensions V_{H} et V_{L} vont permettre de définir différentes positions possibles PosB pour une balise BA. Ainsi, une combinaison de mesures de tensions V_{H} et V_{L} sera représentative d'une position possible PosB pour une balise BA.

Dans une variante de réalisation non limitative, au moins une résistance R2', R3', R4' est définie de sorte à générer un court-circuit CC entre au moins deux broches parmi ladite broche Bv+, ladite broche Bv-, lesdites deux broches de codage BvH, BvL auxquelles ladite au moins une résistance est reliée. Ainsi au moins une résistance est sensiblement égale à 0Ω ce qui correspond à avoir un court-circuit entre les deux broches auxquelles ladite résistance est reliée. Cette variante de réalisation est simple à réaliser et peu coûteuse.

Ainsi, un court-circuit CC peut être réalisé entre au moins deux broches Bv+, Bv-, BvH, BvL dudit connecteur véhicule CoV de chaque balise BA qui est alimentée. Bien entendu, aucun court-circuit CC ne peut être réalisé entre la broche Bv+ et la broche Bv-.

On notera que les connecteurs CoV sont alimentés en même temps que les balises BA sont alimentées.

Ainsi, dans un exemple de réalisation non limitatif, tel qu'illustré sur le tableau de codage TC de la figure 5, un court-circuit CC peut être réalisé entre :
- les broches Bv+ BvH ; ou
- les broches Bv+ BvH, et BvH BvL ; ou
- les broches BvH BvL ; ou
- les broches BvH BvL et BvL Bv- ; ou
- les broches BvL Bv- ; ou
- les broches Bv+ BvH et BvL Bv-.

Bien entendu, on peut avoir d'autres combinaisons de courts-circuits.

Ainsi, en fonction de l'emplacement du connecteur véhicule CoV sur le véhicule automobile V (qui correspondant à l'emplacement de la balise BA dont le connecteur balise CoA sera connecté audit connecteur véhicule CoV), dans cette variante de réalisation non limitative, on effectue des shunt tel que définis dans le tableau de codage TC.

On notera que l'unité électronique centrale PE comporte en mémoire une liste de positions PosB possibles pour les balises BA. Cette liste est prédéfinie par le constructeur automobile par exemple. Dans un mode de réalisation non limitatif, il y a autant de positions PosB qu'il y a de balises BA. Dans l'exemple non limitatif des six balises BA1 à BA6, six positions PosB1 à PosB6 sont prédéfinies et sont dans un exemple non limitatif tel qu'illustré sur les figures 2 et 3 :
- PosB1 : au niveau du pneu avant droit ;
- PosB2 : au niveau du pneu avant gauche ;
- PosB3 : au niveau des portières droites ;
- PosB4 : au niveau des portières gauches ;
- PosB5 : au niveau du pneu arrière droit ;
- PosB6 : au niveau du pneu arrière gauche.

Dans un mode de réalisation non limitatif, un numéro est attribué à une position PosB. Ainsi, les numéros 0x01 à 0x06 sont attribués.

L'unité électronique centrale PE connaît ainsi la liste des six positions PosB1 à PosB6 possibles pour une balise BA, mais lors de leur installation sur le véhicule automobile V, l'unité électronique centrale PE ne sait pas au départ à quelle position PosB les balises BA sont installées. Aussi, il faut que l'unité électronique centrale PE identifie les balises BA et identifie la position PosB à laquelle elles ont été installées sur le véhicule automobile V. Ceci est fait lors de la phase d'initialisation PH0.

Lors de cette phase d'initialisation PH0, les balises BA effectuent au moins une mesure de tension V_{H}, V_{L} sur leur connecteur balise CoA et à partir de cette au moins une mesure de tension V_{H}, V_{L} déterminent leur propre position PosB sur le véhicule automobile V en fonction du tableau de codage de la figure 5. Puis, les balises BA vont envoyer leur position PosB à l'unité électronique centrale PE qui va l'enregistrer en mémoire (fonction illustrée sur les figures 1a et 1b SAV(IDi, PosBi)). L'unité électronique centrale PE va ainsi avoir en mémoire la liste MAP des identifiants ID de chaque balise BA associés à leur position PosB respective. Dans l'exemple non limitatif, elle aura ainsi en mémoire un identifiant ID d'une balise BA associé à un numéro de position PosB.

Lorsque l'unité électronique centrale PE connaît toutes les positions PosB respectivement associées aux différentes balises BA, par la suite, elle est adaptée pour transmettre audit terminal utilisateur SP l'identifiant ID et la position PosB associée de chaque balise BA sur le véhicule automobile V via un canal de communication sécurisé (fonction illustrée sur les figures 1a et 1b TX(PE, SP, IDi, PosBi)), à savoir dans un canal de données CD via une trame de données.

### • Compteur temporel principal CPTA

Le compteur temporel principal CPT_{A} est adapté pour être déclenché en corrélation temporel avec l'activation de l'alimentation Vcc de toutes les balises BA.

A savoir, il est déclenché en même temps que l'activation de ladite alimentation Vcc ou avec un décalage temporel connu du terminal utilisateur SP.

Le compteur temporel principal CPT_{A} est initialisé à une valeur initiale prédéfinie qui est connue de l'unité électronique centrale PE (ou du calculateur CAC) et du terminal utilisateur SP. Dans un exemple non limitatif, cette valeur initiale est égale à zéro.

Le compteur temporel principal CPT_{A} s'incrémente à chaque intervalle de temps T1. Cet intervalle de temps T1 est un intervalle de temps entre deux diffusions d'une trame d'annonce ADV par une balise BA ou par l'unité électronique centrale PE. Dans un exemple non limitatif, cet intervalle de temps est égal à 100ms (millisecondes). Ainsi, le compteur temporel principal CPT_{A} s'incrémente toutes les 100ms dans un exemple non limitatif. Dans un exemple non limitatif, le compteur temporel principal CPT_{A} s'incrémente de un.

Lors de la phase d'initialisation PH0 décrite plus loin, le compteur temporel principal CPT_{A} est géré par l'unité centrale électronique PE ou par le calculateur CAC vu précédemment. Dans ce cas, l'unité centrale électronique PE ou le calculateur CAC est adapté pour :
- déclencher ledit compteur temporel principal CPTA en corrélation temporelle avec l'activation de l'alimentation Vcc des balises BA (fonction illustrée sur les figures 1a et 1b LNCH(CPT_{A})) ;

Lors de la phase de fonctionnement PH1 décrite plus loin, dans un premier mode de réalisation non limitatif illustré sur la figure 1a, le compteur temporel principal CPT_{A} est également géré par l'unité centrale électronique PE ou le calculateur CAC. Dans ce cas, l'unité centrale électronique PE (ou le calculateur CAC) est adaptée pour :
- déclencher ledit compteur temporel principal CPT_{A} en corrélation temporel avec l'activation de l'alimentation Vcc des balises BA (fonction illustrée sur les figures 1a et 1b LNCH(CPT_{A})) ;
- transmettre ledit compteur temporel principal CPTA au terminal utilisateur SP via un canal de communication sécurisé (fonction illustrée sur les figures 1a et 1b TX(CPT_{A})), à savoir dans un canal de données CD via une trame de données.

Lors de la phase de fonctionnement PH1 décrite plus loin, dans un deuxième mode de réalisation non limitatif illustré sur la figure 1b, le compteur temporel principal CPT_{A} est géré par le terminal utilisateur SP. Dans ce cas, l'unité centrale électronique PE (ou le calculateur CAC) est adaptée pour transmettre au terminal utilisateur SP une information FLG lui indiquant que les balises BA viennent d'être alimentées via un canal de communication sécurisé. Sur réception de cette information FLG, ledit terminal utilisateur SP est adapté pour déclencher ledit compteur temporel principal CPT_{A} et pour l'incrémenter.

Dans un mode de réalisation non limitatif, un unique compteur temporel principal CPT_{A} est utilisé.

Les compteurs temporels principal CPTA et secondaires CPTB sont utilisés lors d'une phase d'initialisation PH0.

Lors de la phase d'initialisation PH0, l'unité électronique centrale PE est adaptée pour recevoir les compteurs temporels secondaires CPT_{B} des balises BA qui sont en train d'être alimentées via une trame d'annonce ADV envoyée par lesdites balises BA. Les compteurs temporels secondaires CPT_{B} sont synchrones avec le compteur temporel principal CPT_{A}. L'unité électronique centrale PE est ainsi adaptée pour corréler lesdits compteurs temporels secondaires CPT_{B} avec le compteur temporel principal CPT_{A} de sorte à vérifier que lesdites balises BA appartiennent bien audit véhicule automobile BA (fonction illustrée sur les figures 1a et 1b COMP(CPT_{B}i, CPT_{A})). On notera que la probabilité pour qu'une balise BA d'un autre véhicule automobile soit alimentée en même moment que la balise BA du véhicule automobile V concerné est relativement faible. A l'issue de cette phase d'initialisation PH0, l'unité électronique centrale PE connaît donc l'identifiant ID unique de la balise BA dont il vient de commuter l'alimentation Vcc ainsi que sa position PosB. A l'issue de la phase d'initialisation PH0, lorsque l'unité électronique centrale PE est détenteur de tous les identifiants ID de toutes les balises BA et de leur positions PosB respective, il peut transférer la liste MAP des tous ces identifiants ID avec leur position PosB associée au terminal utilisateur SP qui doit les utiliser pour sa localisation POS. Il n'est plus alors possible pour le terminal utilisateur SP de confondre deux véhicules automobiles.

On notera que la phase d'initialisation PH0 peut être répétée plusieurs fois pour diminuer la probabilité d'erreur lors de la réception des valeurs des compteurs temporels secondaires CPT_{B}. A savoir, les alimentations Vcc de toutes les balises BA sont coupées puis réactivées.

Les compteurs temporels principal CPT_{A} et secondaires CPT_{B} sont utilisés également lors d'une phase de fonctionnement PH1 décrite plus loin. Dans cette phase de fonctionnement PH1, le terminal utilisateur SP va pouvoir comparer un compteur temporel secondaire CPT_{B} d'une balise BA avec le compteur temporel principal CPT_{A} associé pour vérifier si par exemple la balise BA n'a pas été piratée.

On notera qu'il peut y avoir des décalages d'horloge dans le temps des différents compteurs temporels secondaires CPT_{B}, en particulier si l'horloge est un oscillateur constitué à partir d'éléments résonnants présentant de fortes dispersion (oscillateur à base de résistance et capacité dit oscillateur RC). En effet, une telle horloge est moins précise dans le temps qu'une horloge à quartz par exemple. Aussi, dès qu'un compteur temporel secondaire CPT_{B} va au-delà d'un décalage d'offset Off déterminé, dans un mode de réalisation non limitatif, l'unité électronique centrale PE est adaptée pour :
- désactiver l'alimentation Vcc de toutes les balises BA simultanément de sorte à réinitialiser tous les compteurs temporels secondaires CPT_{B} à leur valeur initiale ;
- réinitialiser le compteur temporel principal CPT_{A} à sa valeur initiale ;
- activer de nouveau l'alimentation Vcc de toutes les balises BA simultanément de sorte à déclencher de nouveau tous les compteurs temporels secondaires CPTB. Ils peuvent alors de nouveau être incrémentés ;
- déclencher de nouveau le compteur temporel principal CPT_{A}. Il peut alors de nouveau être incrémenté en même temps que tous les compteurs secondaires CPT_{B} des balises BA ;
- informer le terminal utilisateur du redémarrage du compteur temporel principal CPT_{A}.

### • Unité électronique secondaire BA

Tel qu'illustré sur les figures 2 et 3, dans un exemple non limitatif, le dispositif d'identification DISP comprend six balises BAi (i=1 à 6). Les six balises BA1 à BA6 sont réparties tout autour du véhicule automobile V et sont aux positions PosB1 à PosB6 décrites précédemment.

Une balise BA est adaptée pour être dans le mode diffusion. A cet effet, la balise BA comprend un module de communication sans fil MC2. Un module de communication sans fil MC2 comprend ainsi une antenne BLE dans un exemple non limitatif qui sert d'émetteur/récepteur. La balise BA est adaptée pour diffuser une trame d'annonce ADV au sein des canaux d'annonce CA vus précédemment lorsqu'elle est alimentée, à savoir lorsqu'elle est mise sous tension par le dispositif de commutation DC de l'unité électronique centrale PE (fonction illustrée sur les figures 1a et 1b BRD(ADV(IDi, CPT_{B}i), PUtx)).

Une balise BA diffuse plusieurs fois une même trame d'annonce ADV séquentiellement sur les canaux d'annonce CA. Une trame d'annonce ADV est ainsi diffusée de façon répétée selon un intervalle de temps T1 régulier ou non vu précédemment.

La trame d'annonce ADV comporte :
- un identifiant ID tel que dans un exemple non limitatif une adresse MAC (« Media Access Control en anglais). Cet identifiant est unique pour chaque balise BA installée sur un véhicule automobile V ;
- un compteur temporel secondaire CPT_{B} ;
- des informations INF qui indiquent :
   - que la balise BA est connectable ou non avec un autre appareil ;
   - la puissance à l'émission PUtx de la trame d'annonce ADV.
- sa position PosB, à savoir ici son numéro de position.

Une balise BA comprend ainsi un compteur temporel secondaire CPT_{B} adapté pour être déclenché en corrélation temporelle avec l'alimentation de ladite balise BA. A savoir, il est déclenché en même temps que l'activation de ladite alimentation Vcc ou avec un décalage temporel connu du terminal utilisateur SP.

Ainsi, la balise BA est adaptée pour déclencher ledit compteur temporel secondaire CPT_{B} en corrélation temporelle avec son alimentation (fonction illustrée sur les figures 1a et 1b LNCH(CPT_{B}i)). Les compteurs temporels secondaires CPT_{B} des balises BA sont tous déclenchés en même temps.

Le compteur temporel secondaire CPT_{B} est initialisé à une valeur initiale prédéfinie qui est connue de la balise BA et du terminal utilisateur SP. Dans un exemple non limitatif, cette valeur initiale est égale à zéro.

Dans un mode de réalisation non limitatif, les compteurs temporels secondaires CPT_{B} des balises BA sont tous initialisés à la même valeur initiale. Cela permet d'avoir une gestion simple des compteurs temporels secondaires CPT_{B}.

Le compteur temporel secondaire CPT_{B} s'incrémente à chaque intervalle de temps T1. Ainsi, le compteur temporel secondaire CPT_{B} s'incrémente toutes les 100ms dans un exemple non limitatif.

Dans un mode de réalisation non limitatif, une balise BA est dans un mode dit non connectable, elle ne peut établir de connexion avec le terminal utilisateur SP. Elle se contente de diffuser des trames d'annonce ADV. Elle n'a pas besoin d'entrer en connexion avec le terminal utilisateur SP.

Une balise BA est adaptée pour effectuer au moins une mesure de tension V_{H}, V_{L} en interne lorsqu'elle est alimentée (fonction illustrée sur les figures 1a et 1b MEAS(V_{H}, V_{L}).

Une balise BA comprend un connecteur CoA, appelé connecteur balise CoA. Le connecteur balise CoA comprend:
- une broche d'alimentation Ba+ (appelée broche Ba+) adaptée pour être reliée à une batterie de véhicule automobile V qui fournit une tension batterie Vbat ;
- une broche de masse Ba- (appelée broche Ba-) adaptée pour être reliée au châssis du véhicule automobile V;
- au moins une broche d'acquisition BaH, BaL à partir de laquelle, lorsqu'elle est alimentée, une mesure de tension V_{H}, V_{L} est effectuée.

Ladite au moins une mesure de tension V_{H}, V_{L} est fonction d'une valeur de ladite au moins une résistance R2', R3', R4' dudit connecteur véhicule CoV. Dans un mode de réalisation non limitatif, deux mesures de tensions V_{H}, V_{L} sont effectuées. Les deux mesures de tension V_{H}, V_{L} forment une combinaison qui est représentative de la position PosB de ladite balise BA et ladite combinaison est différente d'une balise BA à une autre sur ledit véhicule automobile V.

A cet effet, dans un mode de réalisation non limitatif illustré sur les figures 1a et 1b, le connecteur balise CoA comprend deux broches d'acquisition, à savoir une broche d'acquisition primaire BaH (appelée broche BaH) et une broche d'acquisition secondaire BaL (appelée broche BaL).

Le connecteur balise CoA est adapté pour se connecter au connecteur véhicule CoV. En particulier, les broches d'alimentation Ba+, de masse Ba-, primaire d'acquisition BaH et secondaire d'acquisition BaL se connectent respectivement aux broches d'alimentation Bv+, de masse Bv-, primaire de codage BvH et secondaire de codage BvL du connecteur véhicule CoV. Chaque balise BA comprend en outre un diviseur de tensions DIV qui va permettre d'avoir différentes mesures de tensions V_{H}, V_{L} sur ses broches BaH et BaL en fonction des valeurs de résistances R2', R3' et R4' dans le connecteur véhicule CoV sur lequel la balise BA peut se connecter.

Dans un mode de réalisation non limitatif illustré sur les figures 1a et 1b, le diviseur de tensions DIV comprend trois résistances R2, R3 et R4 réparties respectivement entre les bornes Ba+ BaH, BaH BaL et BaL Ba-.

Dans un mode de réalisation non limitatif, les trois résistances R2, R3 et R4 ont la même valeur. Cela permet d'obtenir un optimum pour discriminer les différentes mesures de tensions V_{H}, V_{L}.

Dans un mode de réalisation non limitatif, la valeur des trois résistances R2, R3 et R4 est égale à 100kΩ.(Ohms). Cette valeur évite tout courant de fuite dans la balise BA. Par ailleurs, cela permet d'avoir une grande distance en tension entre les deux broches d'acquisition primaire BaH et secondaire BaL, ce qui réduit les erreurs possibles d'acquisition, à savoir les erreurs sur les mesures de tension V_{H}, et V_{L}.

Le tableau de codage TC de la figure 5 montre un codage de positions PosB possibles d'une balise BA en fonction de combinaisons de mesures de tensions, une combinaison étant fonction ici de l'absence ou de la présence d'un court-circuit CC réalisé entre au moins deux broches du connecteur véhicule CoV.

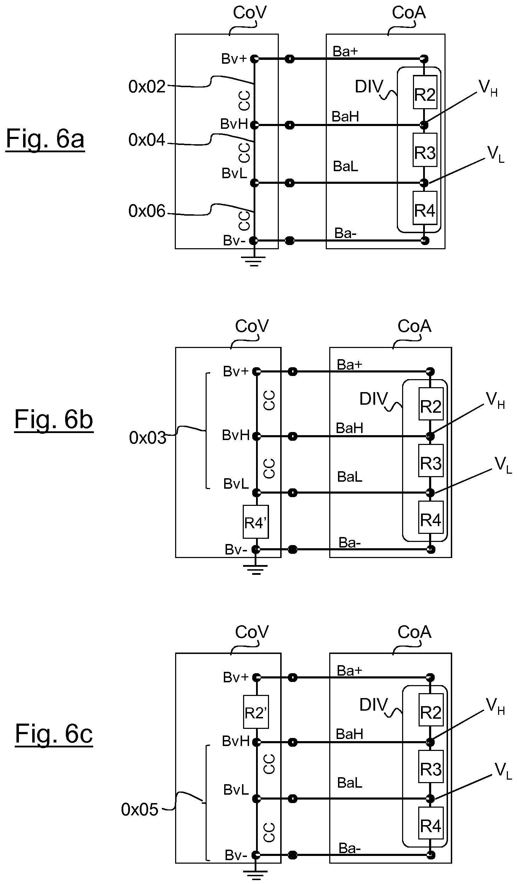

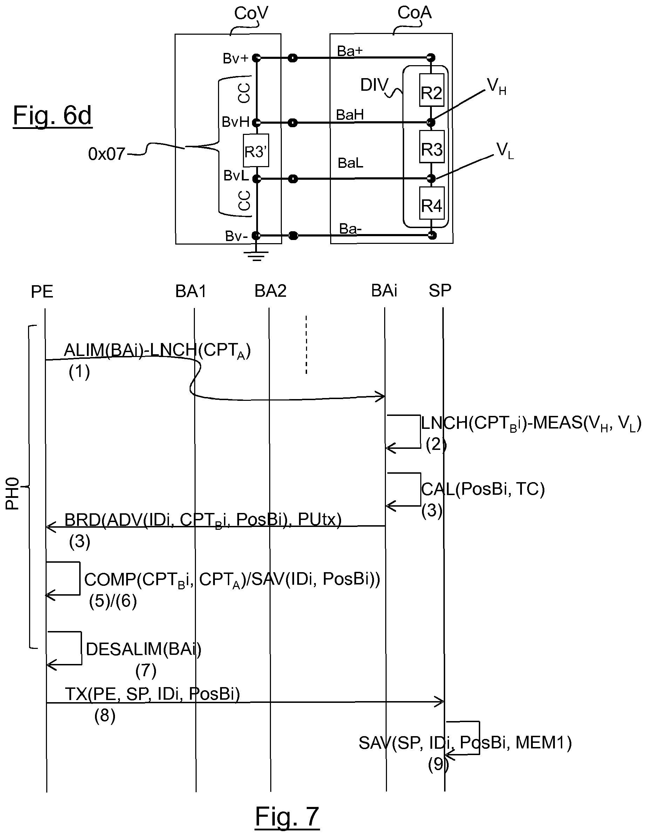

Ainsi, tel qu'illustré sur la figure 5 :
- a) s'il n'existe pas de court-circuit CC (les résistances R2', R3' et R4' du connecteur véhicule CoV sont infinies ou très élevées), les mesures de tensions aux broches BaH et BaL de la balise BA sont respectivement égales à 2/3*Vbat et 1/3*Vbat, ce qui correspond à la position 0x01. Dans ce cas, dans un mode de réalisation non limitatif, les valeurs des résistances R2', R3' et R4' sont respectivement égales à celles des résistances R2, R3 et R4 ;
- b) s'il existe un court-circuit CC (tel qu'illustré sur la figure 6a) entre la borne Bv+ et la borne BvH du connecteur véhicule CoV, les mesures de tensions aux broches BaH et BaL de la balise BA sont respectivement égales à Vbat et Vbat/2, avec Vbat la tension d'alimentation Vcc des balises BA (qui est égale à une tension batterie), ce qui correspond à la position 0x02. Dans ce cas, dans un mode de réalisation non limitatif, la valeur de la résistance R2' est sensiblement égale à zéro et les valeurs des résistances R3' et R4' sont respectivement égales à celles des résistances R3 et R4 ;
- c) s'il existe un court-circuit CC (tel qu'illustré sur la figure 6b) entre la borne Bv+ et la borne BvH, et la borne BvH et la borne BvL du connecteur véhicule CoV, les mesures de tensions aux broches BaH et BaL de la balise BA sont respectivement égales à Vbat et Vbat ce qui correspond à la position 0x03 Dans ce cas, dans un mode de réalisation non limitatif, la valeur des résistances R2' et R3' est sensiblement égale à zéro et la valeur de la résistance R4' est égale à celle de la résistance R4 ;
- d) s'il existe un court-circuit CC (tel qu'illustré sur la figure 6a) entre la borne BvH et la borne BvL du connecteur véhicule CoV, les mesures de tensions aux broches BaH et BaL de la balise BA sont respectivement égale à Vbat/2 et Vbat/2 ce qui correspond à la position 0x04. Dans ce cas, dans un mode de réalisation non limitatif, la valeur de la résistance R3' est sensiblement égale à zéro et les valeurs des résistances R2' et R4' sont respectivement égales à celles des résistances R2 et R4 ;
- e) s'il existe un court-circuit CC (tel qu'illustré sur la figure 6c) entre la borne BvH et la borne BvL, et la borne BvL et la borne Bv- du connecteur véhicule CoV, les mesures de tensions aux broches BaH et BaL de la balise BA sont respectivement égale à la masse Gnd ce qui correspond à la position 0x05. Dans ce cas, dans un mode de réalisation non limitatif, la valeur des résistances R3' et R4' est sensiblement égale à zéro et la valeur de la résistance R2' est égale à celle de la résistance R2;
- f) s'il existe un court-circuit CC (tel qu'illustré sur la figure 6a) entre la borne BvL et la borne Bv- du connecteur véhicule CoV, les mesures de tensions aux broches BaH et BaL de la balise BA sont respectivement égale Vbat/2 et à la masse Gnd ce qui correspond à la position 0x06. Dans ce cas, dans un mode de réalisation non limitatif, la valeur de la résistance R4' est sensiblement égale à zéro et les valeurs des résistances R2' et R3' sont respectivement égales à celles des résistances R2 et R3 ;
- g) s'il existe un court-circuit CC (tel qu'illustré sur la figure 6d) entre la borne Bv+ et la borne BvH, et la borne BvL et Bv- du connecteur véhicule CoV, les mesures de tensions aux broches BaH et BaL de la balise BA sont respectivement égale Vbat et à la masse Gnd ce qui correspond à la position 0x07. Dans ce cas, dans un mode de réalisation non limitatif, la valeur des résistances R2' et R4' est sensiblement égale à zéro et la valeur de la résistance R3' est égale à celle de la résistance R3.

Ainsi, chaque combinaison des mesures de tensions V_{H} et V_{L} sur les broches BaH et BaL de la balise BA est représentative d'une position PosB de la balise BA sur le véhicule automobile V.

Ainsi, les combinaisons a) à f) décrites ci-dessus et illustrées sur le tableau de codage TC de la figure 5 sont associées respectivement aux positions 0x01 à 0x06 sur le véhicule automobile V, à savoir aux positions PosB1 à PosB6 décrites précédemment, une septième position PosB7 pouvant être également définie selon la combinaison g) du tableau de codage TC de la figure 5.

Ainsi, lorsqu'elle est alimentée, en fonction des mesures de tensions V_{H} et V_{L} qu'elle va effectuer sur ses broches BaH et BaL, une balise BA va déterminer sa propre position PosB sur le véhicule automobile V en fonction du tableau de codage TC.

On notera qu'une balise BA aura en mémoire la liste des correspondances entre la combinaison des mesures de tensions V_{H} et V_{L} aux broches BaH et BaL et les positions PosB1 à PosB6, à savoir le tableau de codage TC.

Si les tensions mesurées V_{H} et V_{L} ne correspondent à aucune combinaison dans la liste de correspondances, cela signifie qu'il y a un défaut ou un problème et la balise BA n'arrive pas à déterminer sa position PosB sur le véhicule automobile V. Dans ce cas, elle renvoie une position 0 (illustrée sur la figure 5) à l'unité électronique centrale PE.

On notera que le tableau de codage TC illustré sur la figure 5 est un exemple non limitatif avec des valeurs de résistances R2', R3', R4' qui permettent de générer un court-circuit CC entre deux broches du connecteur véhicule CoV auxquelles sont reliées chaque résistance. Ainsi, le tableau de codage TC peut varier selon que :
- les valeurs des résistances R2', R3', R4' sont identiques ;
- on fait varier les valeurs des résistances R2', R3', R4' ;
- les valeurs des résistances R2', R3', R4' sont différentes d'une balise BA à l'autre.

Ainsi, d'une balise BA à une autre, la combinaison des mesures de tensions V_{H}, V_{L} est différente de sorte à définir une position PosB différente pour chaque balise BA sur le véhicule automobile V, et les mesures de tensions V_{H}, V_{L} dépendent de la variation des valeurs des résistances R2', R3', R4'. Ainsi, d'un connecteur véhicule CoV à un autre, la combinaison des valeurs des résistances R2', R3', R4' sont différentes.

Ainsi, on peut effectuer un codage d'autant de positions PosB désirées sur le véhicule automobile V pour les balises BA.

### • Phase d'initialisation PH0

Afin d'obtenir la liste des positions PosB et des balises BA, lors d'une phase d'initialisation PH0 appelée également phase d'apprentissage, l'unité électronique centrale PE est adaptée pour alimenter chaque balise BA simultanément.

Lors de l'alimentation des balises BA :
- le compteur temporel principal CPT_{A} est déclenché en corrélation temporelle avec l'activation de l'alimentation Vcc de toutes les balises BA , à savoir dès leur mise sous tension. Il s'incrémente dans le temps, à savoir toutes les 100ms dans l'exemple non limitatif pris ;
- le compteur temporel secondaire CPT_{B} est également déclenché en corrélation temporelle avec l'alimentation desdites balises BA. Il s'incrémente dans le temps en même temps que le compteur temporel principal CPT_{A}, à savoir toutes les 100ms dans l'exemple non limitatif pris. Le compteur temporel secondaire CPT_{B} et le compteur temporel principal CPT_{A} sont des événements synchrones.

Lorsque la balise BA est alimentée, elle effectue des mesures de tensions V_{H}, V_{L} et en fonction des valeurs de ces mesures de tensions, elle récupère sa position PosB. A cet effet, elle compare la valeur des mesures de tensions avec le tableau de codage TC qu'elle a en mémoire.

Puis, elle diffuse une trame d'annonce ADV qui comprend son identifiant ID, son compteur temporel secondaire CPT_{B}, et sa position PosB sur le véhicule automobile V, à savoir l'emplacement où elle a été montée sur ledit véhicule automobile V.

En recevant l'identifiant ID et la position PosB de chaque balise BA, l'unité électronique centrale PE peut établir une la liste des balises et de leur position PosB respective, plus particulièrement une liste d'identifiants ID avec leur position PosB respective associée.

Par ailleurs, en recevant le compteur temporel secondaire CPT_{B} d'une balise BA, l'unité électronique centrale PE est adaptée pour comparer les valeurs des deux compteurs temporels principal CPT_{A} et secondaire CPT_{B} qui ont été déclenchés en même temps et en fonction de ladite comparaison de savoir si la balise BA appartient bien audit véhicule automobile V ou à un autre véhicule automobile qui serait à proximité dudit véhicule automobile V concerné. Si les valeurs des deux compteurs temporels principal CPT_{A} et secondaire CPT_{B} sont égales, alors la balise BA appartient bien au véhicule automobile V, sinon elle n'appartient pas au véhicule automobile V. Dans ce dernier cas, la balise BA concernée n'est pas prise en compte. Ainsi, grâce aux compteurs temporels principal CPT_{A} et secondaire CPT_{B}, l'appairage de la balise BA au véhicule automobile V (en particulier à ladite unité électronique centrale PE) est effectué.

La figure 7 illustre les étapes de la phase d'initialisation PH0. Dans l'exemple non limitatif illustré, le compteur temporel principal CPTA est déclenché dès l'activation de l'alimentation Vcc des balises BA. Il en est de même pour les compteurs temporels secondaires CPT_{B}.

A l'étape 1), l'unité électronique centrale PE active l'alimentation Vcc de toutes les balises BAi (avec i=1 à 6) en même temps grâce à son dispositif de commutation DC et déclenche le compteur temporel principal CPT_{A}. L'interrupteur IT se ferme de sorte à mettre sous tension lesdites balises BA1 à BA6.

A l'étape 2), chaque balise BAi déclenche son compteur temporel secondaire CPT_{B}i et mesure les deux tensions V_{H}, V_{L} en interne sur ses broches d'acquisition BaH, BaL de son connecteur balise CoA.

A l'étape 3), à partir des mesures de tensions V_{H}, V_{L} et du tableau de codage TC, chaque balise BAi en déduit sa position PosB sur le véhicule automobile V.

A l'étape 4), chaque balise BAi diffuse une trame d'annonce ADVi avec son identifiant IDi, son compteur temporel secondaire CPT_{B}i, et sa position PosBi. L'unité électronique centrale PE reçoit les trames d'annonce ADVi de chaque balise BAi.

A l'étape 5), l'unité électronique centrale PE corrèle le compteur temporel principal CPT_{A} et le compteur temporel secondaire CPT_{B}i reçu de chaque balise BAi de sorte à vérifier si chaque balise BAi appartient bien au véhicule automobile V.

A l'étape 6), si le compteur principal CPT_{A} et le compteur temporel secondaire CPT_{B}i sont égaux, l'unité électronique centrale PE sauvegarde en mémoire l'identifiant IDi avec la position PosBi correspondante de la balise BAi concernée. Elle aura ainsi en mémoire une liste MAP de correspondance entre les identifiants IDi de chaque balise BAi et leur position respective associée PosBi.

Puis, à l'étape 7), l'unité électronique centrale PE désactive l'alimentation Vcc de toutes les balises BAi en même temps, ces dernières sont ainsi mises hors tension, et le compteur temporel principal CPT_{A} est réinitialisé ainsi que les compteurs temporels secondaires CPT_{B}.

La phase initiale PH0 est ainsi terminée.

Lorsque un terminal utilisateur SP a été appairé au véhicule automobile V, à l'étape 8), l'unité électronique centrale PE transmet la liste MAP des positions PosB et des identifiants ID de balises BA associés au terminal utilisateur SP via un canal de communication sécurisé.

A l'étape 9), le terminal utilisateur SP sauvegarde en mémoire MEM1 ladite liste MAP.

On notera que la phase d'initialisation PH0 est lancée sans qu'il y ait besoin d'une communication avec un terminal utilisateur SP. Elle est exécutée avant la vente du véhicule automobile V à un particulier ou après la vente lors d'une réparation dans un exemple non limitatif.

On notera que les étapes 8) et 9) ne font pas partie de la phase d'initialisation PH0. En effet, elles se font avec le terminal utilisateur SP quand le véhicule automobile V a été vendu à un particulier dans un exemple non limitatif.

On notera que la phase d'initialisation PH0 peut être lancée :
- de façon automatique quand il n'y a aucun identifiant ID de balise BA dans la mémoire du calculateur CAC ou de l'unité électronique centrale PE, soit par l'unité électronique centrale PE elle-même, soit par le calculateur connectable CAC qui envoie une commande d'initialisation à l'unité électronique centrale PE via le réseau LIN/CAN pour qu'elle démarre la phase d'initialisation PH0 ;
- via une commande de diagnostic lancée par un opérateur via un outil de diagnostic standard sur la chaîne de fabrication ou dans un service après-vente ;
- lorsque la batterie est repositionnée dans le véhicule automobile V après avoir été déconnectée dudit véhicule automobile V, etc.

### • Phase de fonctionnement PH1

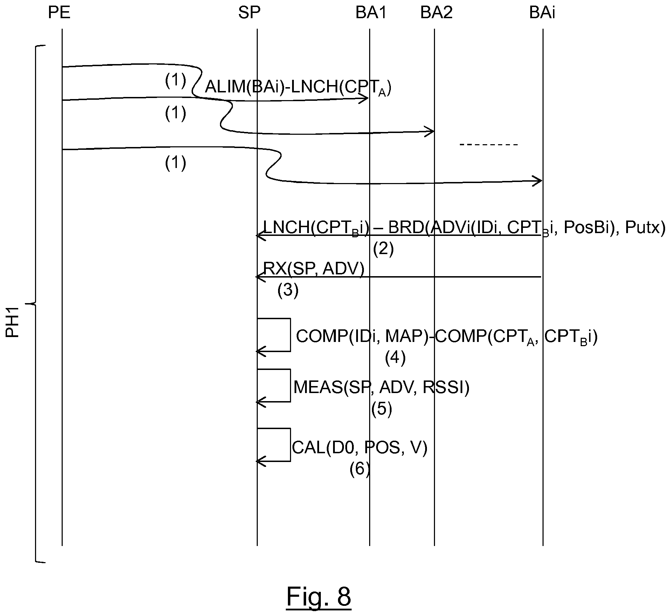

La phase de fonctionnement PH1 est illustrée sur la figure 8.

Elle s'effectue après que le terminal utilisateur SP a été appairé au véhicule automobile V, à savoir a été reconnu par le véhicule automobile V. Il y a donc un canal de communication sécurisé établi entre l'unité électronique centrale PE (ou le calculateur connectable CAC) et ledit terminal utilisateur SP.

Dans l'exemple non limitatif de la figure 8, l'unité électronique centrale PE gère le compteur temporel principal CPT_{A}. Dans l'exemple non limitatif illustré, le compteur temporel principal CPTA est déclenché dès l'activation de l'alimentation Vcc des balises BA. Il en est de même pour les compteurs temporels secondaires CPT_{B}.

Lors de la phase de fonctionnement PH1, à l'étape 1), l'unité électronique PE est adaptée pour :
- activer l'alimentation Vcc de toutes les balises BA simultanément ; et
- déclencher son compteur temporel principal CPT_{A} en corrélation temporelle avec l'activation de l'alimentation Vcc desdites balises BA.

A l'étape 2), dans l'exemple non limitatif des six balises BA1 à BA6, l'activation de leur alimentation Vcc simultanément entraîne que les six balises BA1 à BA6 déclenchent leur compteur temporel secondaire respectif CPT_{B}1 à CPT_{B}6, et diffusent toutes les 100ms des trames d'annonce respectives ADV1 à ADV6 respectivement associées, lesdites trames d'annonce ADV1 à ADV6 comprenant respectivement les identifiants ID1 à ID6 des six balises BA1 à BA6, leur compteur temporel secondaire associé CPT_{B}1 à CPT_{B}6 et les six positions PosB1 à PosB6 des six balises BA1 à BA6.

A l'étape 3), Le terminal utilisateur SP va ainsi recevoir :
- via le canal de communication sécurisé, le compteur temporel principal CPT_{A} ;
- via les trames d'annonce ADV1 à ADV6, les six identifiants ID1 à ID6, les six compteurs temporels secondaires CPT_{B}1 à CPT_{B}6, et les six positions PosB1 à PosB6.

A l'étape 4), lorsque le terminal utilisateur SP reçoit une trame d'annonce ADV d'une balise BA, il va ainsi :
- comparer l'identifiant ID de la balise BA reçu avec les identifiants provenant de la liste MAP sauvegardée en mémoire MEM1 ; et
- comparer le compteur temporel secondaire CPT_{B} de ladite balise BA avec le compteur temporel principal CPT_{A} reçu.

Il le fait pour chaque balise BA dont il reçoit une trame d'annonce ADV et dès qu'il reçoit ladite trame d'annonce ADV. En comparant l'identifiant ID de la balise BA reçu avec les identifiants provenant de la liste MAP en mémoire, le terminal utilisateur SP récupère la position PosB exacte (dans ladite liste MAP en mémoire) des balises BA dont il a reçu les différentes trames d'annonce ADV. Il pourra donc calculer correctement sa distance D0 par rapport à chacune des balises BA installées. Dans un mode de réalisation non limitatif, le terminal utilisateur SP est adapté pour, en fonction de l'identifiant ID reçu dans la trame d'annonce ADV diffusée par une balise BA, comparer la position PosB reçue dans ladite trame d'annonce ADV et la position PosB de la liste MAP en mémoire. Si les deux positions PosB sont égales, cela garantit que personne n'a interchangé les balises BA de place. Si les deux positions PosB sont différentes, la phase d'initialisation PH0 peut être relancée.

S'il manque un identifiant ID par rapport à tous les identifiants ID en mémoire, cela veut dire qu'il y a un problème. Dans ce cas, on affiche sur l'écran d'affichage E du terminal utilisateur SP qu'il y a une erreur et les étapes suivantes ne sont pas exécutées, ou le calcul de la position POS du terminal utilisateur SP se fait en mode dégradé, à savoir sans la mesure de la puissance en réception RSSI de la trame d'annonce ADV de la balise BA qui fait défaut.

Si les identifiants ID reçus correspondent à ceux de la liste MAP sauvegardée en mémoire mais si au moins un des compteurs temporels secondaires CPT_{B} est différent du compteur temporel principal CPT_{A} associé, cela signifie qu'il y a une balise BA qui est désynchronisée, ou que la balise BA en question fait l'objet d'une tentative de piratage par tentative de simulation du signal d'origine de la vraie balise BA appartenant au véhicule automobile V (à savoir simulation de la trame d'annonce ADV ou de la trame de données). Dans ce cas, on coupe l'alimentation de la balise BA en question pour resynchroniser les compteurs temporels. Si la synchronisation n'est pas bonne, alors on affiche une erreur sur l'écran E du terminal utilisateur SP et les étapes suivantes ne sont pas exécutées.

Si un identifiant ID n'est pas compris dans la liste MAP sauvegardée en mémoire, cela signifie que la balise BA appartient à un autre véhicule automobile V. Elle n'est pas prise en compte pour le calcul de la position POS du terminal utilisateur SP.

Si les identifiants ID reçus correspondent à ceux de la liste MAP sauvegardée en mémoire, cela signifie que toutes les balises BA ont bien été identifiées ainsi que leur position exacte PosB en fonction de la liste MAP sauvegardée en mémoire. De plus, si tous les compteurs temporels secondaires CPT_{B} sont égaux au compteur temporel principal CPT_{A}, cela signifie qu'il n'y a pas de balise BA piratée. Les étapes suivantes peuvent être exécutées.

A l'étape 5), ainsi, après identification des balises BA et de leur position PosB, le terminal utilisateur SP effectue une mesure de la puissance en réception RSSI des trames d'annonces ADV reçues telles que mentionnées précédemment. Il effectue un tri de ces mesures RSSI en fonction de la balise BA qui diffuse la trame d'annonce ADV, grâce à son identifiant ID. Par la suite, la distance D0 à laquelle se trouve ledit terminal utilisateur SP du véhicule automobile V peut être déterminée pour chaque balise BA en fonction des mesures des puissances en réception RSSI. On connaît ainsi à quelle distance D0 se trouve le terminal utilisateur SP de la balise BA1, à quelle distance D0 il se trouve de la balise BA2 et à quelle distance D0 il se trouve de la balise BA3 etc. Cette détermination est effectuée en fonction d'une courbe de calibration qui indique pour une valeur de distance donnée quelle est la puissance à l'émission PUtx et quelle est la mesure de la puissance en réception RSSI correspondante. Une telle courbe étant connue de l'homme du métier, elle n'est pas décrite ici.

Enfin, à l'étape 6), la position POS du terminal utilisateur SP par rapport au véhicule automobile V est déterminée en fonction des distances D0 déterminées de chaque balise BA. Dans un mode de réalisation non limitatif, la position POS est déterminée selon une méthode de localisation bien connue de l'homme du métier. Dans un mode de réalisation non limitatif, cette détermination est effectuée par le terminal utilisateur SP ou par l'unité électronique centrale PE. Dans l'exemple non limitatif illustré, elle est effectuée par le terminal utilisateur SP.

En fonction de la position POS du terminal utilisateur SP et de la fonction Fct demandée, cette dernière est exécutée ou non par le véhicule automobile V. Ainsi, dans des exemples non limitatifs :
- si le terminal utilisateur SP se trouve à l'extérieur du véhicule automobile V, la fonction Fct de démarrage est autorisée (pour pouvoir sortir le véhicule automobile d'une place de parking par exemple) ou non ;
- si le terminal utilisateur SP se trouve à l'intérieur du véhicule automobile V, la fonction Fct de verrouillage des ouvrants extérieurs n'est pas autorisée ;
- si le terminal utilisateur SP se trouve côté gauche du véhicule automobile V, la fonction Fct d'ouverture de la portière côté droit du véhicule automobile V n'est pas autorisée ;
- si le terminal utilisateur SP se trouve dans le coffre, la fonction Fct de démarrage est autorisée ;
- si le terminal utilisateur SP se trouve à une distance inférieure à 2 mètres du véhicule automobile V, telle que préconisée par le consortium Thatcham, alors la fonction Fct de déverrouillage des ouvrants est autorisée

On notera qu'au cours de la phase de fonctionnement PH1, pour éviter le problème de décalage d'horloge dans le temps des différents compteurs secondaires CPT_{B}, dès qu'un compteur temporel secondaire CPT_{B} va au-delà du décalage d'offset Off déterminé, l'unité électronique centrale PE :
- désactive l'alimentation Vcc de toutes les balises BA simultanément. Puis, l'unité électronique centrale PE réactive de nouveau l'alimentation Vcc de toutes les balises BA simultanément.
- réinitialise le compteur temporel principal CPT_{A}.

Suite à la désactivation de l'alimentation Vcc d'une balise BA, le compteur temporel secondaire CPT_{B} est réinitialisé à sa valeur initiale.

Chaque balise BA concernée diffuse par la suite son compteur temporel secondaire CPT_{B} ainsi réinitialisé. Ils sont ainsi reçus par le terminal utilisateur SP.

L'unité électronique centrale PE envoie via le canal de communication sécurisé également au terminal utilisateur SP le compteur temporel principal CPT_{A} réinitialisé. Lesdits compteurs temporels secondaires CPT_{B} ainsi que le compteur temporel principal CPT_{A} s'incrémentent de nouveau toutes les 100ms après la réactivation de l'alimentation Vcc de la ou des balises BA.

Si au moins un compteur temporel secondaire CPT_{B} n'est pas réinitialisé correctement par rapport à sa valeur initiale, cela signifie qu'il y a un problème, par exemple que la balise BA est piratée. Dans ce cas, le calcul de la position POS du terminal utilisateur SP n'est pas effectué et la fonction Fct n'est pas exécutée.

Bien entendu la description de l'invention n'est pas limitée à l'application, aux modes de réalisation et aux exemples décrits ci-dessus. Ainsi, dans un mode de réalisation non limitatif où les balises BA sont positionnées dans les pneus, elles peuvent être utilisées pour une application TPMS nommée en anglais « Tire Pressure Monitoring System » qui donne des informations sur la pression du pneu.

Ainsi, dans un autre mode de réalisation non limitatif, la fonction Fct exécutée est un parking automatique du véhicule automobile V.

Ainsi, dans un mode de réalisation non limitatif, une seule mesure de tension peut être effectuée sur une broche d'acquisition d'un connecteur balise BA (ce dernier ne comportant alors qu'une seule broche d'acquisition) ce qui permet de définir deux positions PosB balises BA. Dans ce cas le connecteur véhicule CoV ne comprend qu'une broche de codage BvH et qu'une seule résistance R' reliée à la broche Bv+ et à une broche de codage BvH.

Ainsi, l'invention décrite présente notamment les avantages suivants :
- elle est simple à mettre en œuvre ;
- elle permet d'utiliser des terminaux utilisateurs SP qui n'ont pas de système embarqué de localisation basse fréquence (BF) tels que les téléphones mobiles par exemple ;
- c'est une solution qui n'implique pas d'opérateur humain et donc évite des erreurs pour la détermination de la position d'une balise ;
- elle permet un gain de temps ;
- elle ne nécessite pas de matériel spécifique. C'est donc une solution moins coûteuse ;
- elle permet de réaliser l'appairage d'une balise BA à un véhicule automobile car elle permet de déterminer si une balise BA appartient bien audit véhicule automobile V ;
- elle permet de déterminer si une balise BA n'a pas été piratée ;
- elle permet à une balise BA de déterminer elle-même sa propre position sur le véhicule automobile V, à savoir l'emplacement auquel elle a été installée sur le véhicule automobile V ;
- elle permet d'indiquer la position PosB des balises BA au terminal utilisateur SP ;
- elle évite d'effectuer une phase d'initialisation par le biais d'une connexion filaire incluant un réseau filaire (comme un réseau LIN ou CAN) entre chaque balise BA et l'unité centrale électronique PE qui nécessite d'ajouter un ou plusieurs fils qui traversent tout le véhicule, ainsi que les composants qui doivent gérer cette communication sur chacune des balises BA.

## Revendications

1. Dispositif d'identification (DISP) d'une position (PosB) d'une unité électronique secondaire (BA) sur un véhicule automobile (V), selon lequel ledit dispositif d'identification (DISP) comprend :
- une unité électronique centrale (PE) adaptée pour gérer l'alimentation (Vcc) d'une pluralité d'unités électroniques secondaires (BA) et comprenant un dispositif de commutation (DC) de l'alimentation (Vcc) de toutes les unités électroniques secondaires (BA) **caractérisé en ce que** ledit dispositif d'identification (DISP) comprend :
- un compteur temporel principal (CPT_{A}) adapté pour être déclenché en corrélation temporelle avec l'activation de l'alimentation (Vcc) desdites unités électroniques secondaires (BA) par ledit dispositif de commutation (DC) ;
- ladite pluralité d'unités électroniques secondaires (BA), chaque unité électronique secondaire (BA) :
- comprenant un compteur temporel secondaire (CPT_{B}) adapté pour être déclenché en corrélation temporelle avec l'alimentation de ladite unité électronique secondaire (BA) ;
- étant adaptée pour effectuer au moins une mesure de tension (V_{H}, V_{L}) en interne lorsqu'elle est alimentée, ladite au moins une mesure de tension (V_{H}, V_{L}) étant représentative de la position (PosB) de ladite unité électronique secondaire (BA) sur ledit véhicule automobile (V).

2. Dispositif d'identification (DISP) selon la revendication 1, selon lequel une unité électronique secondaire (BA) est une balise.

3. Dispositif d'identification (DISP) selon la revendication 1 ou la revendication 2, selon lequel le dispositif de commutation (DC) est adapté pour activer l'alimentation (Vcc) de ladite pluralité d'unités électroniques secondaires (BA) simultanément.

4. Dispositif d'identification (DISP) selon l'une quelconque des revendications précédentes 1 à 3, selon lequel une unité électronique secondaire (BA) comprend un connecteur (CoA) comportant une broche d'alimentation (Ba+), une broche de masse (Ba-) et au moins une broche d'acquisition (BaH, BaL) à partir de laquelle ladite au moins une mesure de tension (V_{H}, V_{L}) est effectuée.

5. Dispositif d'identification (DISP) selon l'une quelconque des revendications précédentes 1 à 4, selon lequel une unité électronique secondaire (BA) est adaptée pour effectuer deux mesures de tensions (V_{H}, V_{L}).

6. Dispositif d'identification (DISP) selon la revendication 5, selon lequel les deux mesures de tension (V_{H}, V_{L}) forment une combinaison qui est représentative de la position (PosB) de ladite unité électronique secondaire (BA) et ladite combinaison est différente d'une unité électronique secondaire (BA) à une autre sur ledit véhicule automobile (V).

7. Dispositif d'identification (DISP) selon l'une quelconque des revendications précédentes 1 à 6, selon lequel ledit connecteur (CoA) de ladite unité électronique secondaire (BA) est adapté pour se connecter à un connecteur véhicule (CoV), ce dernier comprenant une broche d'alimentation (Bv+), une broche de masse (Bv-) et au moins une broche de codage (BvH, BvL) et au moins une résistance (R2', R3', R4') reliée à au moins deux broches parmi ladite broche d'alimentation (Bv+), ladite broche de masse (Bv-) et ladite au moins une broche de codage (BvH, BvL) et selon lequel ladite au moins une mesure de tensions (V_{H}, V_{L}) est fonction d'une valeur de ladite au moins une résistance (R2', R3', R4').

8. Dispositif d'identification (DISP) selon la revendication 7, selon lequel ledit connecteur véhicule (CoV) comprend deux broches de codage (BvH, BvL).

9. Dispositif d'identification (DISP) selon la revendication 7 ou selon la revendication 8, selon lequel la valeur de ladite au moins une résistance (R2', R3', R4') est définie de sorte à générer un court-circuit (CC) entre lesdites au moins deux broches (Bv+, Bv-, BvH, BvL) auxquelles ladite au moins une résistance (R2', R3', R4') est reliée.

10. Dispositif d'identification (DISP) selon l'une quelconque des revendications précédentes 1 à 9, selon lequel lorsqu'elle est alimentée, une unité électronique secondaire (BA) est adaptée pour diffuser une trame d'annonce (ADV) comprenant un identifiant (ID), sa position (PosB) sur le véhicule automobile (V) et ledit compteur temporel secondaire (CPT_{B}).

11. Dispositif d'identification (DISP) selon la revendication précédente 10, selon lequel ladite unité électronique centrale (PE) est adaptée pour :
- recevoir ladite trame d'annonce (ADV) diffusée par ladite unité électronique secondaire (BA) ;
- corréler ledit compteur temporel secondaire (CPT_{B}) avec ledit compteur temporel principal (CPT_{A}) de sorte à vérifier que ladite unité électronique secondaire (BA) appartient audit véhicule automobile (V) ;
- enregistrer en mémoire ladite position (PosB) avec ledit identifiant (ID) de ladite unité électronique secondaire (BA) reçus dans ladite trame d'annonce (ADV).

12. Dispositif d'identification (DISP) selon la revendication précédente 11, selon lequel ladite unité électronique centrale (PE) est en outre adaptée pour transmettre audit terminal utilisateur (SP) ledit identifiant (ID) et ladite position (PosB) associée de chaque unité électronique secondaire (BA) sur le véhicule automobile (V).

13. Dispositif d'identification (DISP) selon l'une quelconque des revendications précédentes 1 à 12, selon lequel ladite unité électronique centrale (PE) est en outre adaptée pour :
- désactiver l'alimentation de toutes les unités électroniques secondaires (BA) simultanément ; et
- réactiver l'alimentation de toutes les unités électroniques secondaires (BA) simultanément.

14. Dispositif d'identification (DISP) selon l'une quelconque des revendications précédentes 1 à 13, selon lequel ledit dispositif de commutation (DC) comprend un unique interrupteur (IT) associé à toutes les unités électronique secondaires (BA).

15. Dispositif d'identification (DISP) selon l'une quelconque des revendications précédentes 1 à 14, selon lequel ladite unité électronique centrale (PE) est un calculateur connectable (CAC) à un réseau du véhicule automobile (V) ou est adaptée pour coopérer avec un calculateur connectable (CAC) à un réseau du véhicule automobile (V).

## Patentansprüche

1. Vorrichtung zur Identifikation (DISP) einer Position (PosB) einer sekundären elektronischen Einheit (BA) an einem Kraftfahrzeug (V), wobei die Identifikationsvorrichtung (DISP) Folgendes umfasst:
- eine elektronische Zentraleinheit (PE), die geeignet ist, die Stromversorgung (Vcc) einer Mehrzahl von sekundären elektronischen Einheiten (BA) zu verwalten und eine Vorrichtung zur Schaltung (DC) der Stromversorgung (Vcc) aller sekundären elektronischen Einheiten (BA) umfasst, **dadurch gekennzeichnet, dass** die Identifikationsvorrichtung (DISP) Folgendes umfasst:
- einen Hauptzeitzähler (CPT_{A}), der geeignet ist, in zeitlicher Korrelation mit der Aktivierung der Stromversorgung (Vcc) der sekundären elektronischen Einheiten (BA) durch die Schaltvorrichtung (DC) ausgelöst zu werden;
- wobei die Mehrzahl von sekundären elektronischen Einheiten (BA), jede sekundäre elektronische Einheit (BA):
- einen Sekundärzeitzähler (CPT_{B}), der geeignet ist, in zeitlicher Korrelation mit der Stromversorgung der sekundären elektronischen Einheit (BA) ausgelöst zu werden, umfasst;
- geeignet ist, mindestens eine Spannungsmessung (V_{H}, V_{L}) intern durchzuführen, wenn sie mit Strom versorgt wird, wobei die mindestens eine Spannungsmessung (V_{H}, V_{L}) für die Position (PosB) der sekundären elektronischen Einheit (BA) am Kraftfahrzeug (V) repräsentativ ist.

2. Identifikationsvorrichtung (DISP) nach Anspruch 1, wobei eine sekundäre elektronische Einheit (BA) eine Bake ist.

3. Identifikationsvorrichtung (DISP) nach Anspruch 1 oder 2, wobei die Schaltvorrichtung (DC) geeignet ist, die Stromversorgung (Vcc) der Mehrzahl von sekundären elektronischen Einheiten (BA) gleichzeitig zu aktivieren.

4. Identifikationsvorrichtung (DISP) nach einem der vorhergehenden Ansprüche 1 bis 3, wobei eine sekundäre elektronische Einheit (BA) einen Verbinder (CoA) umfasst, der einen Stromversorgungsstift (Ba+), einen Massestift (Ba-) und mindestens einen Erfassungsstift (BaH, BaL), von welchem ausgehend die mindestens eine Spannungsmessung (V_{H}, V_{L}) durchgeführt wird, aufweist.

5. Identifikationsvorrichtung (DISP) nach einem der vorhergehenden Ansprüche 1 bis 4, wobei eine sekundäre elektronische Einheit (BA) geeignet ist, zwei Spannungsmessungen (V_{H}, V_{L}) durchzuführen.

6. Identifikationsvorrichtung (DISP) nach Anspruch 5, wobei die zwei Spannungsmessungen (V_{H}, V_{L}) eine Kombination bilden, die für die Position (PosB) der sekundären elektronischen Einheit (BA) repräsentativ ist, und die Kombination von einer sekundären elektronischen Einheit (BA) zu einer anderen am Kraftfahrzeug (V) verschieden ist.

7. Identifikationsvorrichtung (DISP) nach einem der vorhergehenden Ansprüche 1 bis 6, wobei der Verbinder (CoA) der sekundären elektronischen Einheit (BA) geeignet ist, mit einem Fahrzeugverbinder (CoV) verbunden zu sein, wobei letzterer einen Stromversorgungsstift (Bv+), einen Massestift (Bv-) und mindestens einen Codierungsstift (BvH, BvL) und mindestens einen Widerstand (R2', R3', R4'), der mit mindestens zwei Stiften von dem Stromversorgungsstift (Bv+), dem Massestift (Bv-) und dem mindestens einen Codierungsstift (BvH, BvL) verbunden ist, umfasst, und wobei die mindestens eine Spannungsmessung (V_{H}, V_{L}) von einem Wert des mindestens einen Widerstands (R2', R3', R4') abhängig ist.

8. Identifikationsvorrichtung (DISP) nach Anspruch 7, wobei der Fahrzeugverbinder (CoV) zwei Codierungsstifte (BvH, BvL) umfasst.

9. Identifikationsvorrichtung (DISP) nach Anspruch 7 oder 8, wobei der Wert des mindestens einen Widerstands (R2', R3', R4') so festgelegt ist, dass ein Kurzschluss (CC) zwischen den mindestens zwei Stiften (Bv+, Bv-, BvH, BvL) erzeugt wird, mit denen der mindestens eine Widerstand (R2', R3', R4') verbunden ist.

10. Identifikationsvorrichtung (DISP) nach einem der vorhergehenden Ansprüche 1 bis 9, wobei eine sekundäre elektronische Einheit (BA), wenn sie mit Strom versorgt wird, geeignet ist, einen Meldungsrahmen (ADV) zu verbreiten, der eine Kennung (ID), ihre Position (PosB) am Kraftfahrzeug (V) und den Sekundärzeitzähler (CPT_{B}) umfasst.

11. Identifikationsvorrichtung (DISP) nach dem vorhergehenden Anspruch 10, wobei die elektronische Zentraleinheit (PE) geeignet ist:
- den Meldungsrahmen (ADV) zu empfangen, der von der sekundären elektronischen Einheit (BA) verbreitet wird;
- den Sekundärzeitzähler (CPT_{B}) mit dem Hauptzeitzähler (CPT_{A}) zu korrelieren, um zu überprüfen, dass die sekundäre elektronische Einheit (BA) zu dem Kraftfahrzeug (V) gehört;
- die Position (PosB) mit der Kennung (ID) der sekundären elektronischen Einheit (BA), die im Meldungsrahmen (ADV) empfangen werden, zu speichern.

12. Identifikationsvorrichtung (DISP) nach dem vorhergehenden Anspruch 11, wobei die elektronische Zentraleinheit (PE) ferner geeignet ist, die Kennung (ID) und die zugehörige Position (PosB) jeder sekundären elektronischen Einheit (BA) am Kraftfahrzeug (V) ans Benutzerendgerät (SP) zu übertragen.

13. Identifikationsvorrichtung (DISP) nach einem der vorhergehenden Ansprüche 1 bis 12, wobei die elektronische Zentraleinheit (PE) ferner geeignet ist:
- die Stromversorgung aller sekundären elektronischen Einheiten (BA) gleichzeitig zu deaktivieren; und
- die Stromversorgung aller sekundären elektronischen Einheiten (BA) gleichzeitig erneut zu aktivieren.

14. Identifikationsvorrichtung (DISP) nach einem der vorhergehenden Ansprüche 1 bis 13, wobei die Schaltvorrichtung (DC) einen einzigen Schalter (IT) umfasst, der allen sekundären elektronischen Einheiten (BA) zugeordnet ist.

15. Identifikationsvorrichtung (DISP) nach einem der vorhergehenden Ansprüche 1 bis 14, wobei die elektronische Zentraleinheit (PE) ein Rechner (CAC) ist, der an ein Netz des Kraftfahrzeugs (V) anschließbar ist, oder geeignet ist, mit einem Rechner (CAC) zusammenzuwirken, der an ein Netz des Kraftfahrzeugs (V) anschließbar ist.

## Claims

1. Device (DISP) for identifying a position (PosB) of a secondary electronic unit (BA) on a motor vehicle (V), wherein said identification device (DI SP) comprises:
- a central electronic unit (PE) suitable for managing the power supply (Vcc) of a plurality of secondary electronic units (BA) and comprising a switching device (DC) for switching the power supply (Vcc) of all the secondary electronic units (BA), **characterized in that** said identification device (DISP) comprises:
- a main timer (CPT_{A}) suitable for being triggered in a time-correlated manner with the activation of the power supply (Vcc) of said secondary electronic units (BA) by said switching device (DC) ;
- said plurality of secondary electronic units (BA), each secondary electronic unit (BA):
- comprising a secondary timer (CPT_{B}) suitable for being triggered in a time-correlated manner with the power supply of said secondary electronic unit (BA);
- being suitable for performing at least one internal voltage measurement (V_{H}, V_{L}) when it is powered, said at least one voltage measurement (V_{H}, V_{L}) being representative of the position (PosB) of said secondary electronic unit (BA) on said motor vehicle

2. Identification device (DISP) according to Claim 1, wherein a secondary electronic unit (BA) is a beacon.

3. Identification device (DISP) according to Claim 1 or Claim 2, wherein the switching device (DC) is suitable for activating the power supply (Vcc) of said plurality of secondary electronic units (BA) simultaneously.

4. Identification device (DISP) according to any one of the preceding Claims 1 to 3, wherein a secondary electronic unit (BA) comprises a connector (CoA) comprising a power supply pin (Ba+), a ground pin (Ba-) and at least one acquisition pin (BaH, BaL) from which said at least one voltage measurement (V_{H}, V_{L}) is performed.

5. Identification device (DISP) according to any one of the preceding Claims 1 to 4, wherein a secondary electronic unit (BA) is suitable for performing two voltage measurements (V_{H}, V_{L}) .

6. Identification device (DISP) according to Claim 5, wherein the two voltage measurements (V_{H}, V_{L}) form a combination which is representative of the position (PosB) of said secondary electronic unit (BA) and said combination is different from one secondary electronic unit (BA) to another on said motor vehicle (V).

7. Identification device (DISP) according to any one of the preceding Claims 1 to 6, wherein said connector (CoA) of said secondary electronic unit (BA) is suitable for being connected to a vehicle connector (CoV), the latter comprising a power supply pin (Bv+), a ground pin (Bv-) and at least one coding pin (BvH, BvL) and at least one resistor (R2', R3', R4') linked to at least two pins out of said power supply pin (Bv+), said ground pin (Bv-) and said at least one coding pin (BvH, BvL) and wherein said at least one voltage measurement (V_{H}, V_{L}) is a function of a value of said at least one resistor (R2', R3', R4').

8. Identification device (DISP) according to Claim 7, wherein said vehicle connector (CoV) comprises two coding pins (BvH, BvL).

9. Identification device (DISP) according to Claim 7 or according to Claim 8, wherein the value of said at least one resistor (R2', R3', R4') is defined so as to generate a short-circuit (CC) between said at least two pins (Bv+, Bv-, BvH, BvL) to which said at least one resistor (R2', R3', R4') is linked.

10. Identification device (DISP) according to any one of the preceding Claims 1 to 9, wherein, when it is powered, a secondary electronic unit (BA) is suitable for broadcasting an advertising frame (ADV) comprising an identifier (ID), its position (PosB) on the motor vehicle (V) and said secondary timer (CPT_{B}) .

11. Identification device (DISP) according to the preceding Claim 10, wherein said central electronic unit (PE) is suitable for:
- receiving said advertising frame (ADV) broadcast by said secondary electronic unit (BA) ;
- correlating said secondary timer (CPT_{B}) with said main timer (CPT_{A}) so as to check that said secondary electronic unit (BA) belongs to said motor vehicle (V);
- saving in memory said position (PosB) with said identifier (ID) of said secondary electronic unit (BA) received in said advertising frame (ADV).

12. Identification device (DISP) according to the preceding Claim 11, wherein said central electronic unit (PE) is also suitable for transmitting to said user terminal (SP) said identifier (ID) and said position (PosB) associated with each secondary electronic unit (BA) on the motor vehicle (V).

13. Identification device (DISP) according to any one of the preceding Claims 1 to 12, wherein said central electronic unit (PE) is also suitable for:
- deactivating the power supply of all the secondary electronic units (BA) simultaneously; and
- reactivating the power supply of all the secondary electronic units (BA) simultaneously.

14. Identification device (DISP) according to any one of the preceding Claims 1 to 13, wherein said switching device (DC) comprises a single switch (IT) associated with all the secondary electronic units (BA).

15. Identification device (DISP) according to any one of the preceding Claims 1 to 14, wherein said central electronic unit (PE) is a computer (CAC) that can be connected to a network of the motor vehicle (V) or is suitable for cooperating with a computer (CAC) that can be connected to a network of the motor vehicle (V).
